(19)

Europäisches
Patentamt
European
Patent Office
Office européen
des brevets

(11) **EP 3 489 797 A1**

(12) **EUROPEAN PATENT APPLICATION**

(43) Date of publication:
**29.05.2019 Bulletin 2019/22**

(51) Int Cl.:
**G06F 1/32** (2019.01) **H04W 64/00** (2009.01)
**H04W 4/02** (2018.01)

(21) Application number: **17204190.7**

(22) Date of filing: **28.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **Gacanin, Haris
2018 Antwerpen (BE)**
• **Atawia, Ramy
2018 Antwerpen (BE)**

(74) Representative: **IP HILLS NV
Hubert Frère-Orbanlaan 329
9000 Gent (BE)**

(54) **CONTROLLING A BATTERY-OPERATED RANGE EXTENDER**

(57)     Disclosed is a method for controlling a battery-operated range extender (102) in a Wifi network (105); and wherein the range extender is operable by the battery in a first location (106) and chargeable and operable at a second location (107); the method comprising: i) obtaining battery status information from the range extender (102); ii) estimating therefrom a discharged time of the battery of the range extender; and iii) obtaining traffic demands and locations from connected wireless stations (103); and iv) estimating therefrom future traffic demands and future locations of the wireless stations (103); and v) determining from the future demands and future locations of the wireless stations (103) an optimal start charging time for charging the range extender; and vi) sending a notification comprising the optimal start charging time to one or more users of the wireless stations.

Fig. 1

# Description

## Technical Field

The present disclosure generally relates to battery-operated range extenders. More particular, the disclosure relates to the control of a battery-operated range extender in a Wi-fi network. The range extender is operable by the battery in a first location within the Wi-fi network and chargeable and operable at a second location within the Wi-fi network.

## Background

With a range extender, the service region of an access point in a Wi-Fi network can be increased. Battery-operated range extenders have the advantage that they can be positioned anywhere because they do not rely on the presence of a socket. However, recharging the batteries might necessitate moving the extender away from its optimal position causing decreased coverage or even service outage. It is therefore important to manage the recharging of range extenders in a Wi-Fi network.

One solution for recharging range extenders is by reactive charging, i.e. by notifying a user when the battery of the range extender drops below a certain predefined threshold.

## Summary

However, reactive charging may pose several problems. First, as the charging location may be different from the location of operation, a user will suffer from decreased quality of service, QoS, during charging. Second, the extender's battery might get depleted during a real-time service to a user thereby impacting again the QoS. Finally, increasing the number of extenders that rely on batteries without proper coordination might result in long outages when multiple extenders are charged at the same time.

It is an object of the present disclosure to overcome the above problems and disadvantages and to provide a solution for managing battery-operated extender that control the charging of the extenders with less impact on the QoS of the users.

This object is achieved, according to a first aspect, by a network controller for controlling a battery-operated range extender in a Wi-fi network; and wherein the range extender is operable by the battery in a first location within the Wi-fi network; and wherein the range extender is chargeable and operable at a second location within the Wi-fi network; and wherein the network controller is configured to perform the following steps when the range extender is operating by the battery at the first location:

- obtaining battery status information from the range extender; and

- estimating therefrom a discharged time of the battery of the range extender; and

- obtaining traffic demands and locations from wireless stations connected to the Wi-fi network; and

- estimating therefrom future traffic demands and future locations of the wireless stations indicative for traffic demands and locations of the wireless stations after the discharged time and during a recharging time interval of the battery; and

- determining from the future demands and future locations of the wireless stations an optimal start charging time for charging the range extender; and

- sending a notification comprising the optimal start charging time for charging the range-extender at the second location to one or more users of the wireless stations.

The controller thus decides on the time, i.e. the optimal charging time, at which the battery-operated range extender should be removed from the first location where the range-extender operates on batteries to the second location where the range extender's batteries are charged. This decision is not taken reactively by notifying the user when the battery has depleted or reaches a certain level of depletion but by predicting when the battery will be depleted and deriving the most optimal time on which the charging of the battery should start. As the controller further estimates the user demand and location after depletion of the battery, it may further select the start charging time before the discharged time, for example when a peak in traffic demand is predicted after the discharged time. As a result, the battery will already be charged during the peak thereby optimizing the user's QoS.

According to an embodiment, the determining the optimal start charging time further comprises:

- verifying a first condition as whether the future traffic demands are met when the optimal start charging time corresponds to the discharged time; and

- when the first condition is met, selecting the start charging time as the discharged time.

In other words, based on the estimated future traffic demands, it is first checked whether these demands can be met when the range extender is charged at the discharged time. If these demands can be met, a notification is sent to start the charging at the discharged time.

Advantageously, the verifying the first condition then further comprises:

- verifying whether the future traffic demands of wireless stations currently connected to the range extender are met when the range extender is at the second location; and/or

- verifying whether the future traffic demands of wireless stations currently connected to the range extender are met by one or more other range extenders in the Wi-fi network and/or by an access point in the Wi-fi network when the range extender is at the second location.

For the verifying the first condition, it may thus be verified whether the future traffic demands may be met by the same range extender when it is in the charging location. Alternatively, or additionally, the condition may be checked by verifying whether other range extenders or the access point may cover the future traffic demands. In both cases, when the condition is met, the range extender may be charged at the charging location at the discharged time.

According to a further embodiment, the determining the optimal start charging time further comprises, when the first condition is not met:

- determining as the optimal start charging time a time before the discharged time at which a largest group of consecutive future demands are met.

In other words, another time than the discharged time is selected as the start charging time when the first condition is not met. In this case, the controller will select a time before the discharged time to be notified.

According to a further embodiment, the determining as the optimal start charging time further comprises:

- determine consecutive time slots up to the discharged time; and
- select as the optimal start an optimal time slot from the time slots at which a largest group of consecutive future demands are met.

This way, the most optimal time slot for charging the range extender is selected, i.e. where the most user demands are met.

According to an embodiment, the network controller is further configured to perform the following steps:

- determining whether the range extender is charging; and
- when the range extender is charging, determining the location of the range extender as the second location; and
- obtain an achieved throughput of a wireless device connected to the range extender; and
- recording the achieved throughput as an achievable throughput of the range extender at the second location for use in the determining the optimal start charging time.

The controller thus tracks of the performance of the range extender at its charging location. This way, an accurate estimation is obtained of an achievable throughput that stations can expect when connected to the range extender at the charging location. This information is then stored and used when determining the optimal start charging time.

The determining whether the range extender is charging may for example be performed by:

- obtaining the battery status of the range extender at two moments in time; determining that the range extender is charging when the battery status increases between the two moments in time.

According to a second aspect, the disclosure further relates to a computer-implemented method for controlling a battery-operated range extender in a Wi-fi network; and wherein the range extender is operable by the battery in a first location within the Wi-fi network; and wherein the range extender is chargeable and operable at a second location within the Wi-fi network; the method comprising the following steps:

- obtaining battery status information from the range extender when the range extender is operating by the battery at the first location; and
- estimating therefrom a discharged time of the battery of the range extender; and
- obtaining traffic demands and locations from wireless stations connected to the Wi-fi network; and
- estimating therefrom future traffic demands and future locations of the wireless stations indicative for traffic demands and locations of the wireless stations after the discharged time and during a recharging time interval of the battery; and
- determining from the future demands and future locations of the wireless stations an optimal start charging time for charging the range extender; and
- sending a notification comprising the optimal start charging time for charging the range extender at the second location to one or more users of the wireless stations.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according the second aspect.

**Brief Description of the Drawings**

Fig. 1 illustrates a network controller and a Wi-Fi network comprising an access-point, range extender and a wireless client according to an embodiment of the invention; and

Fig. 2 shows a plot in time of the battery power of the range extender of Fig. 1 and of an estimated throughput demand of the wireless client of Fig. 1 according to an embodiment of the invention; and

Fig. 3 illustrates steps for notifying a user of a start charging time performed by a network controller according to an embodiment of the invention; and

Fig. 4 illustrates steps for determining a start charging time by a network controller according to an embodiment of the invention; and

Fig. 5 illustrates steps for determining and storing an achieved throughput of a range extender performed by a network controller according to an embodiment of the invention; and

Fig. 6 illustrates a suitable computing system for performing steps according to various embodiments of the invention.

**Detailed Description of Embodiment(s)**

The present disclosure relates to battery-operated range extenders. More particular, the disclosure relates to the control of a battery-operated range extender in a Wi-Fi network. The range extender is operable by the battery in a first location within the Wi-Fi network and chargeable and operable at a second location within the Wi-fi network.

A Wi-Fi network is a wireless local area network, WLAN, with communication devices communicating based on the IEEE 802.11 standards. The communication devices are further connected to another communication network via a wireless access point, an AP. A range-extender, also referred to as wireless repeater, is a communication device that extends the range of a Wi-Fi network. To achieve this, the range-extender takes an existing signal from the wireless access point and rebroadcasts the signal.

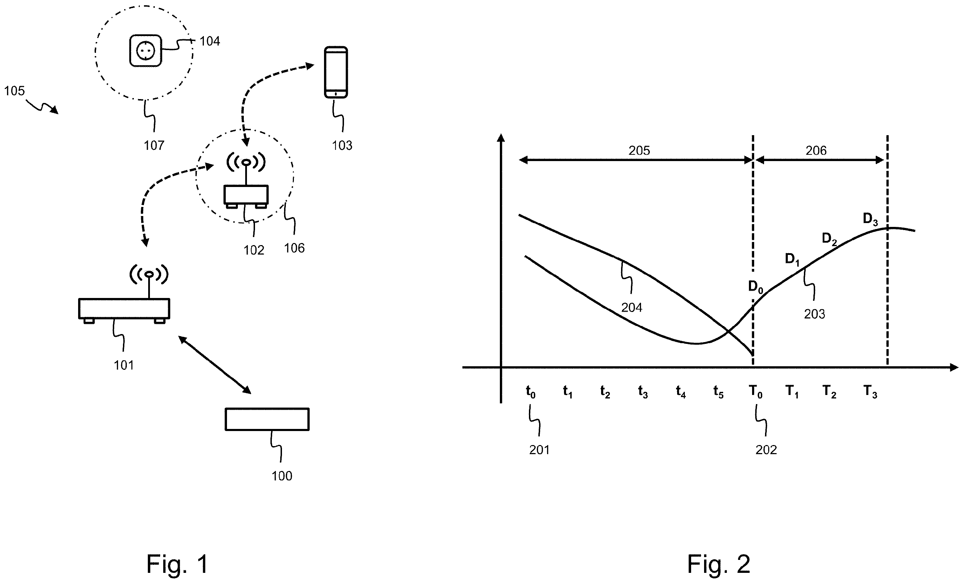

Fig. 1 illustrates such a Wi-Fi network 105 comprising an access point 101, a range extender 102 and a wireless communication device 103 acting as a wireless client. The wireless client communicates with the access point 101 by the range extender 102 which is located at a first position 106 within the Wi-Fi network 106. The range-extender is operable on battery power in location 102. Battery power is to be understood as power delivered by a dischargeable power source such as a battery or capacitor. The battery of the range-extender is chargeable at a location 107 different than location 102, e.g. from a power socket 104 or the like. From time-to-time, range-extender 102 must be moved from its first position 106 to such a charging location 107. Rang-extender 102 may also be operable as range-extender at this charging location 107. Fig. 1 further illustrates a network controller 100. Network controller 100 is arranged to determine a time at which the range extender is to be charged at the charging location 104, i.e. a start charging time.

Fig. 2 shows a plot with a first curve 204 illustrating the discharge of the battery power of the range-extender 102. The curve 204 starts at a certain moment in time to (201) which reflects the situation of Wi-Fi network 105. The battery is considered to be fully discharged at time To (202) further referred to as the discharged time 202. The curve 203 further illustrates the throughput demand of wireless client 103 in time. The throughput demand may for example be expressed in Mbits per second. The throughput demand is quantified as $D_0$ to $D_3$ at respective times $T_0$ to $T_3$.

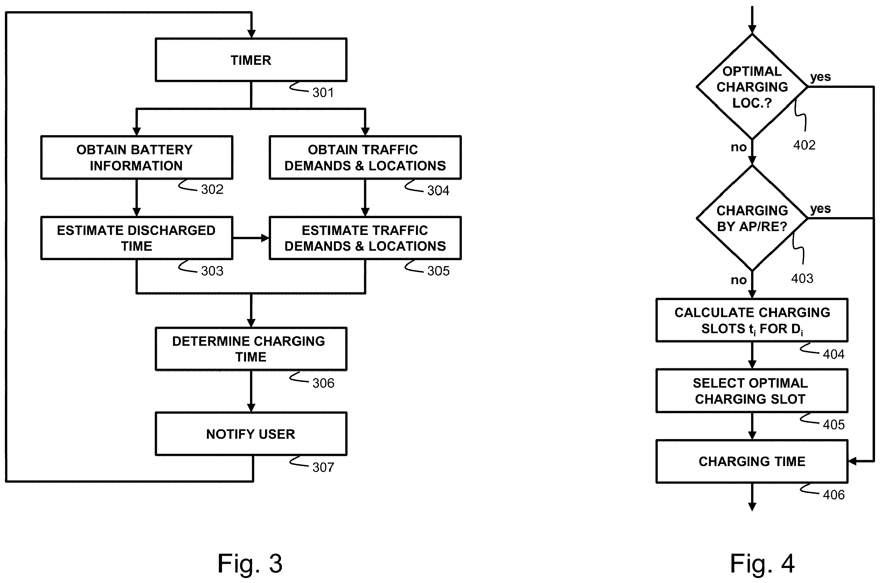

Fig. 3 illustrates steps 302-307 performed by a suitable computing system, e.g. network controller 100, for determining the start charging time of a range extender 102 at a certain moment in time. Steps 302-307 will further be illustrated with reference to the wireless network 105 of Fig. 1 and the graph of Fig. 2. For this purpose, it is assumed that the execution of steps 302-307 is started at time to. Further times $t_1$ to $t_5$ and $T_0$ to $T_3$ are thus considered future moments in time upon execution. Steps 302-307 may be executed at regular time intervals, for example after lapse of a timer 301. Certain steps may be executed in parallel or as a sequence, e.g. steps 302 and 304 may be executed in parallel.

In step 302, the battery status of range extender 102 at location 106 is obtained. This may for example be done by sending a query to the range extender 102 over the wireless network 105. The range extender 102 then replies with the battery status in reply. Then, in step 303, the battery status is used to estimate the discharged time To (202) of the battery, i.e. the time at which the range extender is considered to be depleted and needs recharging under normal operation conditions. To estimate the discharged time 202, a battery discharging model may be used. Such a model is for example proposed by Zhao, Xia, et al. "A system context-aware approach for battery lifetime prediction in smart phones." Proceedings of the 2011 ACM Symposium on Applied Computing, 2011. Therein the battery discharging model is given by:

$$Y = -0.5614\,X + 100.98$$

wherein

X is the time duration in minutes; and
Y is the corresponding relative battery level expressed in percentage wherein 0% corresponds to fully depleted and 100% corresponds to fully charged.

The discharged time 202 is then calculated obtained as:

$$T_0 = t_0 + X/0.5614$$

Wherein

$T_0$ is the discharged time 202 expressed in minutes; and
$t_0$ is the current time 201; and
$X$ is the battery level at the current time $t_0$.

In step 304, the current traffic demands and locations of wireless clients connected to the wireless network 105 are obtained among which wireless client 103 which is currently connected to range extender 102. The traffic demand may be expressed in a bit rate such as Mbit per second. The location may for example be defined by or derived from a received signal to noise between the respective client and the range extender or access point. Alternatively, the location may be defined by a maximum time delay for packets exchanged between the client and the range extender or access point.

In step 305, the future traffic demands and locations of the wireless clients are estimated bashed on the obtained from traffic demands and locations. The estimation is performed for a future time interval that is at least the discharged time 202 plus the time to recharge the battery of the range extender 102, i.e. up to time $T_3$ in the example of Fig. 2. Different prediction models may be used for the estimation ranging from simple extrapolation of the obtained demands and locations to more accurate prediction models that take into account the characteristics of a wireless network. Such a model is for example disclosed by L. Vu, Q. Do and K. Nahrstedt in "Jyotish: A novel framework for constructing predictive model of people movement from joint Wifi/Bluetooth trace, " 2011 IEEE International Conference on Pervasive Computing and Communications (PerCom), Seattle, WA, 2011, pp. 54-62.

In step 306, an optimal charging time of the range extender 102 is determined based on the estimated discharged time 203 and the estimated traffic demands 203. The optimal charging time is thus a time selected from the range from the current time to (201) to the discharged time To (202) on which the range extender 102 is to be put at a charging location 107. This optimal charging time is then notified to a user in step 307 which, on its turn, may then put the range extender 102 at the charging location 107 and charge it from the wall socket 104. The optimal charging time is considered optimal when it meets the estimated traffic demands 203 of all clients in the wireless network 105, or, when it meets the estimated traffic demands for a maximum amount of users.

Fig. 4 illustrates steps performed for determining the optimal charging time in step 306 of Fig. 3 according to an embodiment of the invention. In a first step 402, the controller 100 verifies whether the estimated traffic demands are met by the range extender 102 itself when the range extender 102 is charged at the charging location 107 at the discharged time 202. If so, the controller 100 proceeds to step 406 and determines the optimal charging time as the discharged time 202. The verification may for example be done by verifying whether the achievable throughput of range extender 102 at the charging location 102 exceeds the estimated traffic demands 203 during the charging 206 of the range extender.

If the range extender cannot meet the estimated traffic demands, the controller 100 proceeds to step 403 where it is verified whether the estimated traffic demands of wireless client can be met by other serving stations in the wireless network 105 while the range extender 102 is being charged, e.g. by the access point 101 or by other range extenders. The candidate serving AP or range extenders are evaluated based on their expected throughput at the user location and on the battery lifetime in case of the extenders. This may be formulated as:

$$j^* = \text{argmax} \left\{ \sum_j \alpha_j (R_j) \right\} \text{ such } \tau_i > T_j,$$

wherein

$j$ is the index of each candidate serving AP or range extender; and
$j^*$ is the index of the selected best candidate; and
$R_j$ is the throughput for a user at the candidate AP or range extender; and
$\tau_i$ is the end time of estimated demand $D_i$; and
$\alpha_j$ is a binary decision variable that equals 1 if the candidate managed AP or extender with index $j$ is selected to serve the demand $D_i$ until extender $i$ is charged, and equals 0 otherwise; and
$T_j$ is the time during which the candidate AP or extender $j$ is used to serve the demand $D_i$.

When a candidate serving access point or range extender is found by the above equation, then the controller 100 proceeds again to step 406 and determines the optimal charging time as the discharged time 202.

When there is no candidate serving access point or range extender found, the controller proceeds to step 404. In this step, the controller determines time slots $t_i$ before the discharged time 202 at which the range extender may possibly be charged at the charging location 107. The controller then proceeds to step 405 and determines an optimal time slot from the time slots as the time slot at which a largest group of consecutive estimated demands $D_i$ (203) are met when the range extender would be charged starting from this time slot. More specifically this may be done in the following way. Assume that the start and end time of an estimated demand $D_i$ is denoted by $\beta_i$ and $\tau_i$, respectively. The time slot at which the battery will be fully charged is denoted as T' and may be calculated as:

$$T' = t[n]' + \Delta t[n]'$$

wherein:

$\Delta t[n]' = (100 - X_{t[n]'})/\, 0.5614$ is the charging duration of the range extender;
$t[n]'$ is a vector of all time slots within which the user may be notified;
first slot is $t[n=0]' = $ to which is the current time slot 201; and
the last time slot $t[n=N]' = \beta_i$ which is the starting time of demand Do.

The above equation is then solved iteratively for $t[n]'$ by incrementing each time by a time slot, for example 5 minutes, where $T' = \beta_i$. All the $t[n]'$ values that are feasible and may satisfy demand $D_i$ are then stored in a set $L_i$. The algorithm is then repeated for each demand $D_i$ to obtain the list of all $L = \{L_1, L_2, ..., L_i, ...\}$. Then all the stored values are checked in a time increasing order, and start time of the slots that satisfy the maximum number of consecutive demands is selected as the optimal charging time. Summarized, steps 404 and 405 thus determine the optimal charging time as the time before the discharged time at which the largest group of consecutive estimated demands Di from the discharged time 202 onwards are met.

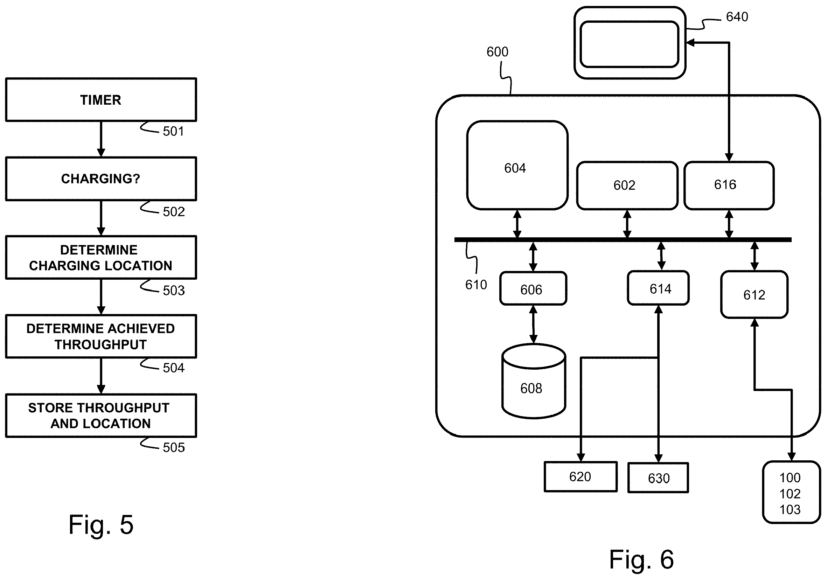

Fig. 5 illustrates steps performed by controller 100 user for obtaining achievable throughputs for wireless clients at various locations within the wireless network 105. This information may then for example be used in the determining step 306 of Fig. 3 and, more particular, in the verification steps 402 and 403 of Fig. 4. The steps may be performed at regular time intervals to determine the throughputs for different situations, e.g. at various locations of a user or for different operating and charging locations of the range extender 102. To do so, the performing of steps 502 to 505 may be triggered by a timer 501.

Upon triggering by timer 501, the controller proceeds to step 502 and checks when the range extender 102 is currently charging. This may be done by obtaining the battery status of the range extender 102 at two times t1 and t2. If the battery status is larger at time t2 than at time t1, then the range extender is charging at a charging location or vice versa. The controller may further distinguish between different charging locations based on the channel measurements such as by the signal level between the access point 101 and range extender 102, such as by the the signal level between the range extender 102 and a wireless client 103 connected to the range extender or by a neighboring Wi-Fi scan at the range extender's location which reports the signal levels from surrounding access points and extenders.

The controller 100 then proceeds to step 504 where it determines the achieved throughput of a wireless client connected to the range extender. The client's throughput at the extender location is calculated using the total transmitted and received bytes by the client device over two time intervals. As such, the throughput $R_c = [(B^{(u)}_c[t_4] + B^{(d)}_c[t_4]) - (B^{(u)}_c[t3] + B^{(d)}_c[t3])]/(t_4 - t_3)$. Where $B^{(u)}_c[t_j]$ and $B^{(D)}_c[t_j]$ are the total received and transmitted data bytes to the user at time slot $t_j$ while the extender is placed at charging station c. In the next step 505, the controller stores the achievable throughput for a certain location of the range extender and client.

Fig. 6 shows a suitable computing system 600 according to an embodiment of the invention. Computing system 600 is suitable for performing the steps of Fig. 3, 4, and 5 according to the above embodiment. Computing system 600 may therefore serve as a partial or complete implementation of network controller 100. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606 and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator to input information to the computing device 600, such as a keyboard 620, a mouse 630, a pen, voice recognition and/or biometric mechanisms, etc. Output interface 616 may comprise one or more conventional mechanisms that output information to the operator, such as a display 640, etc. Communication interface 612 may comprise any transceiver-like mechanism such as for example one or more Ethernet interfaces that enables computing system 600 to communicate with other devices and/or systems, for example with access point 101, with range extender 102 or with wireless clients such as wireless client 103. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage elements 608 above is described as a local disk, in general any other suitable computer-readable media such as a removable magnetic disk, optical storage media such as a CD or DVD, -ROM disk, solid state drives, flash memory cards, ... could be used. The system 600 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network controller (100) for controlling a battery-operated range extender (102) in a Wi-fi network (105); and wherein the range extender is operable by the battery in a first location (106) within the Wi-fi network; and wherein the range extender is chargeable and operable at a second location (107) within the Wi-fi network; and wherein the network controller (100) is configured to perform the following steps when the range extender is operating by the battery at the first location (106):

    - obtaining (302) battery status information (204) from the range extender (102); and
    - estimating (303) therefrom a discharged time (202) of the battery of the range extender; and
    - obtaining (304) traffic demands and locations from wireless stations (103) connected to the Wi-fi network (105); and
    - estimating (305) therefrom future traffic demands (203) and future locations of the wireless stations (103) indicative for traffic demands and locations of the wireless stations after the discharged time (202) and during a recharging time interval (206) of the battery; and
    - determining (306) from the future demands and future locations of the wireless stations (103) an optimal start charging time for charging the range extender; and
    - sending (307) a notification comprising the optimal start charging time to one or more users of the wireless stations.

2. The network controller (100) according to claim 1 wherein the determining (306) the optimal start charging time further comprises:

    - verifying (402, 403) a first condition as whether the future traffic demands (203) are met when the optimal start charging time corresponds to the discharged time (202); and
    - when the first condition is met, selecting the start charging time as the discharged time (202).

3. The network controller (100) according to claim 2 wherein verifying the first condition further comprises:

    - verifying (402) whether the future traffic demands of wireless stations currently connected to the range extender are met when the range extender is at the second location (107); and/or
    - verifying (403) whether the future traffic demands of wireless stations currently connected to the range extender are met by one or more other range extenders in the Wi-fi network and/or by an access point (101) in the Wi-fi network when the range extender is at the second location (107).

4. The network controller (100) according to claim 2 or 3 wherein the determining (306) the optimal start charging time further comprises, when the first condition is not met:

    - determining (404,405) as the optimal start charging time a time before (205) the discharged time at which a largest group of consecutive future demands are met.

5. The network controller (100) according to claim 4 wherein the determining (404, 405) as the optimal start charging time further comprises:

- determine (404) consecutive time slots up to the discharged time; and
- select (405) as the optimal start an optimal time slot from the time slots at which a largest group of consecutive future demands are met.

6. The network controller (100) according to any one of the preceding claims further configured to perform the following steps:

- determining (502) whether the range extender is charging (102); and
- when the range extender is charging, determining the location (104) of the range extender as the second location; and
- obtain (504) an achieved throughput of a wireless device connected to the range extender; and
- recording (505) the achieved throughput as an achievable throughput of the range extender at the second location (104) for use in the determining (306) the optimal start charging time.

7. The network controller (100) according to claim 6 wherein the determining whether the range extender is charging further comprises:

- obtaining the battery status of the range extender at two moments in time; determining that the range extender is charging when the battery status increases between the two moments in time.

8. A computer-implemented method for controlling a battery-operated range extender (102) in a Wi-fi network (105); and wherein the range extender is operable by the battery in a first location (106) within the Wi-fi network; and wherein the range extender is chargeable and operable at a second location (107) within the Wi-fi network; the method comprising the following steps:

- obtaining (302) battery status information (204) from the range extender (102) when the range extender is operating by the battery at the first location (106); and
- estimating (303) therefrom a discharged time (202) of the battery of the range extender; and
- obtaining (304) traffic demands and locations from wireless stations (103) connected to the Wi-fi network (105); and
- estimating (305) therefrom future traffic demands (203) and future locations of the wireless stations (103) indicative for traffic demands and locations of the wireless stations after the discharged time (202) and during a recharging time interval (206) of the battery; and
- determining (306) from the future demands and future locations of the wireless stations (103) an optimal start charging time for charging the range extender; and
- sending (307) a notification comprising the optimal start charging time to one or more users of the wireless stations.

9. A computer program product comprising computer-executable instructions for performing the method according to claim 8 when the program is run on a computer.

10. A computer readable storage medium comprising the computer program product according to claim 9.

11. A data processing system programmed for carrying out the method according to claim 9.

Fig. 2

Fig. 1

Fig. 3

Fig. 4

Fig. 5

Fig. 6

EP 3 489 797 A1

Europäisches
Patentamt
European
Patent Office
Office européen
des brevets

# EUROPEAN SEARCH REPORT

**Application Number**

EP 17 20 4190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/323974 A1 (SHUSTER GARY STEPHEN [US] ET AL) 12 November 2015 (2015-11-12) | 1,8-11 | INV. G06F1/32 H04W64/00 H04W4/02 |
| A | * paragraphs [0011], [0012], [0035], [0037], [0039], [0047], [0049], [0064], [0078], [0082] * | 2-7 | |
| A | GB 2 529 857 A (SAMSUNG ELECTRONICS CO LTD [KR]) 9 March 2016 (2016-03-09) * paragraphs [0090], [0100], [0115], [0126], [0174], [0175] * | 1-11 | |
| A | JP 2012 164325 A (INTERBRO CO LTD) 30 August 2012 (2012-08-30) * paragraphs [0016], [0017], [0033] - [0036] * | 1-11 | |

TECHNICAL FIELDS
SEARCHED (IPC)

G06F
H04W

The present search report has been drawn up for all claims

| Place of search | Date of completion of the search | Examiner |
|---|---|---|
| The Hague | 14 May 2018 | Ferrandis-Ruiz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 4190

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2018

| Patent document cited in search report | | Publication date | Patent family member(s) | | Publication date |
|---|---|---|---|---|---|
| US 2015323974 | A1 | 12-11-2015 | NONE | | |
| GB 2529857 | A | 09-03-2016 | CN | 106663362 A | 10-05-2017 |
| | | | EP | 3189506 A1 | 12-07-2017 |
| | | | GB | 2529857 A | 09-03-2016 |
| | | | GB | 2548011 A | 06-09-2017 |
| | | | KR | 20160028946 A | 14-03-2016 |
| JP 2012164325 | A | 30-08-2012 | JP | 2009246944 A | 22-10-2009 |
| | | | JP | 2012164325 A | 30-08-2012 |
| | | | KR | 20090103538 A | 01-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHAO, XIA et al.** A system context-aware approach for battery lifetime prediction in smart phones. *Proceedings of the 2011 ACM Symposium on Applied Computing,* 2011

- **L. VU, Q. DO ; K. NAHRSTEDT.** Jyotish: A novel framework for constructing predictive model of people movement from joint Wifi/Bluetooth trace. *2011 IEEE International Conference on Pervasive Computing and Communications (PerCom),* 2011, 54-62